# EUROPEAN PATENT SPECIFICATION

(11) **EP 2 205 181 B1**
(45) Date of publication and mention of the grant of the patent: **11.07.2018**
(21) Application number: 08829319.6
(22) Date of filing: 28.08.2008
(51) Int. Cl.: A61C 13/00, A61C 8/00, A61C 8/02

(54) **DENTAL PROSTHETIC DEVICE**
ZAHNPROTHESENVORRICHTUNG
DISPOSITIF DE PROTHÈSE DENTAIRE

(30) Priority: 30.08.2007 US 847476; 02.07.2008 US 167004
(43) Date of publication of application: 14.07.2010
(60) Divisional application: 18176180.0
(73) Proprietor: Zimmer Dental Inc., Carlsbad, CA 92008 (US)
(72) Inventor: COLLINS, Michael, San Marcos, CA 92078 (US); BASSETT, Jeffrey A., Vista, CA 92084 (US); CAHILL, Sean, Temecula, CA 92592 (US)
(74) Representative: Manitz Finsterwald Patentanwälte PartmbB
(86) International application number: PCT/US2008/074642
(87) International publication number: WO 2009/032759

(56) References cited:
- WO-A1-2006/107292
- US-A- 3 934 347
- US-A- 5 425 639
- US-A- 5 759 034
- US-A- 5 947 893
- US-A- 5 961 328
- DEPORTER D A ET AL: "A histological evaluation of a functional endosseous, porous-surfaced, titanium alloy dental implant system in the dog", JOURNAL OF DENTAL RESEARCH, INTERNATIONAL ASSOCIATION FOR DENTAL RESEARCH, US, vol. 67, no. 9, 1 September 1988 (1988-09-01), pages 1190-1195, XP009169150, ISSN: 0022-0345

## Description

### BACKGROUND OF THE INVENTION

### 1. Field of the Invention

The present invention relates to prosthetic devices such as implants, and in particular, to dental prosthetic devices with a surface that promotes soft tissue ingrowth.

### 2. Description of the Related Art

Dental prosthetic devices are commonly used as anchoring members for dental restorations to provide prosthetic teeth at one or more edentulous sites in a patient's dentition. Known dental implant systems include a dental implant made from a suitable biocompatible material, such as titanium. The dental implant is typically placed into a bore which is drilled into the patient's mandible or maxilla at the edentulous site. The implant provides an anchoring member for a dental abutment, which in turn provides an interface between the implant and a dental restoration or prosthesis. The restoration is typically a porcelain crown fashioned according to known methods.

Many current dental implant surgeries are performed in two stages. In the initial or first stage, an incision is made in the patient's gingiva at an edentulous side, and the bore is drilled into the patient's mandible or maxilla. The implant is then threaded or impacted into the bore using a suitable driver. Such an implant is typically called a subgingival or two-stage implant. The coronal end of the two-stage implant stops at the coronal surface of the alveolar and does not extend through the gingiva. Thereafter, a cap is fitted onto the implant to close the abutment coupling structure of the implant, and the gingiva is sutured over the implant. Over a period of several months, the patient's jaw bone grows around the implant to securely anchor the implant in the surrounding bone, a process known as osseointegration (note that herein jaw refers to either the mandible or maxillae).

In a second stage of the procedure following osseointegration, the dentist reopens the gingiva at the implant site and secures an abutment and optionally, a temporary prosthesis or temporary healing member, to the implant. The gingiva then grows around and against the abutment or healing member. Then, a suitable permanent prosthesis or crown is fashioned, such as from one or more impressions taken of the abutment and the surrounding gingival tissue and dentition. In the final stage, the temporary prosthesis or healing member is removed and replaced with the permanent prosthesis, which is attached to the abutment with cement or with a fastener, for example.

Alternatively, in a single-stage surgery, a transgingival implant extends through the gingival layer coronally of the alveolar. The transgingival implant may be part of a two-piece prosthetic device where the implant still requires an abutment to be placed upon it for loading. Other transgingival implants include a one-piece implant or prosthetic device. The one-piece implant has an integrally formed abutment that supports a prosthesis. In these cases, the gingiva grows around and against the transgingival implant during the healing period.

Before the gingiva has completely healed tightly around a prosthetic device extending through the gingival layer, the space between the gingiva and the prosthetic device may be relatively large. In this state, bone loss can occur when harmful, corrosive bacteria, similar to those encountered in periodontal diseases of natural teeth, grow between the prosthetic device and the gingiva and reach exposed bone adjacent the implant and underneath the gingival layer. One way to prevent such bone loss is to have the patient maintain thorough oral hygiene. To assist with this effort, a smooth surface is provided on the prosthetic device at and near the gingiva so that the implant or abutment is more easily cleaned of plaque, pathogenic organisms, and endotoxins than is a rough surface that has crevices that cannot be reached readily by dental cleaning devices such as brushes. Such a system, however, relies heavily on the oral hygienic habits of the patient who are often neglectful or simply may not be sufficiently skilled to adequately clean such a surface.

Thus, improvements to more effectively limit bacteria from reaching bone adjacent a dental prosthetic device are desired. Initial developments in this respect are described in WO 2006/107292, which teaches a device in accordance with the preamble of claim 1, and in DEPORTER D A ET AL, "A histological evaluation of a functional endosseous, porous-surfaced, titanium alloy dental implant system in the dog", JOURNAL OF DENTAL RESEARCH, INTERNATIONAL ASSOCIATION FOR DENTAL RESEARCH, US, (19880901), vol. 67, no. 9, ISSN 0022-0345, pages 1190 - 1195.

### BRIEF DESCRIPTION OF THE DRAWINGS

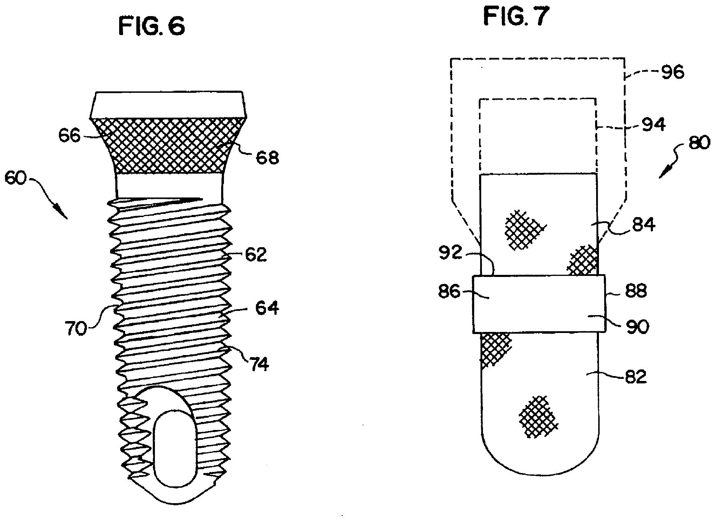

In the following, FIG. 7 shows a device in accordance with the present invention while the remaining figures show devices that do not fall under the scope of the claims.
FIG. 1 is a side elevational view of a dental abutment of a dental prosthetic device;
FIG. 2 is a cross-sectional view of the dental abutment of FIG. 1;
FIG. 3 is an enlarged fragmentary view of a porous metal portion of the dental prosthetic device of FIG. 1;
FIG. 4 is a side elevational view of an alternative abutment for a dental prosthetic device;
FIG. 5 is a cross-sectional view of the alternative abutment of FIG. 4;
FIG. 6 is a side elevational view of an alternative single-stage implant for a dental prosthetic device;
FIG. 7 is a side elevational view of an implant for the dental prosthetic device according to the present invention;
FIG. 8 is a side cross-sectional view of yet another alternative implant for a dental prosthetic device; and
FIG. 9 is a side cross-sectional view of still another alternative implant for a dental prosthetic device.

### DETAILED DESCRIPTION

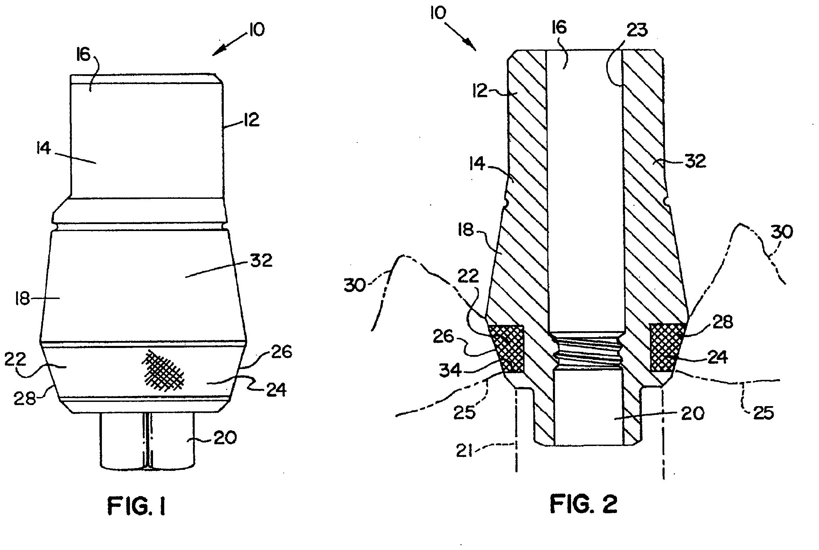

Referring to FIGS. 1-3, a dental prosthetic device 10 includes an abutment 12 with a body 14. A coronal end portion 16 of the body 14 is configured to support and engage a prosthesis in the shape of a tooth or may be shaped to support other prosthesis such as dentures, bridges, and the like. An apical end portion 18 of the body 14 has implant interface structure 20 to connect to a separate implant 21 (as shown in shadow line on FIG. 2) for engaging and anchoring in bone tissue of a jaw.

Although the abutment interface structure is shown here with an external hex shape to be received in an internally hex-shaped cavity on an implant, the arrangement may be reversed or may have other types of implant/abutment interfaces, such as threads or splines disclosed by U.S. Patent No. 5,449,291, the or other geometric shapes such as octagons, lobes, and other shapes. A fastener bore 23 extends through the abutment 12 to receive a fastener to secure the abutment 12 to the implant 21.

In order to limit bacteria from reaching the jaw under the gingiva and adjacent an implant upon which the abutment 12 sits, the body 14 has a soft tissue engagement region 22 formed of porous metal material 24 for the ingrowth of soft tissue 30 (indicated in shadow line on FIG. 2) into the pores and is positioned where it can be placed in contact with soft tissue. Once soft tissue integrates into the porous metal material 24, a barrier or seal 25 is formed that blocks bacteria from migrating apically to bone tissue and assists with maintaining the contours of the gingiva and inter-dental papilla by holding the soft tissue in place.

Thus, in the illustrated form, the soft tissue engagement region 22 forms an outer surface 26 on an emergence profile portion 28 formed on the abutment body 14 and that is embedded within soft tissue 30. The outer surface 26 is inclined to match a desired profile for the emergence profile portion 28 which generally matches the contour of natural teeth. The soft tissue engagement region 22 may also extend radially inward to provide further surface area and network structure for further engaging and holding the soft tissue to strengthen the connection between the soft tissue and the porous metal material 24. The soft tissue engagement region 22 also has an at least partially annular or ring shape. In one alternative form, the soft tissue engaging region 22 at least generally encircles the body 14 as in the illustrated example.

The body 14 has a main portion 32 that forms an annular recess or groove 34 that opens at least radially outward for receiving the porous material 24 to form soft tissue engagement region 22. In one case, only the outer surface 26 of the soft tissue engagement region 22 is exposed. The shape of the recess 34 is annular to coincide with the ring shape of the soft tissue engagement region 22 which, in one form, generally fills the recess.

It will be appreciated that many other shapes and configurations are possible for the soft tissue engagement region such as extending on only a portion or portions of the circumference of the body 14, whether a single continuous piece or separate pieces spaced around the circumference. Likewise, the soft tissue engagement region may only be a thin layer or surface on the body 14 rather than extending significantly radially inward, or may extend radially inward only at certain points or portions of the body 14 rather than all the way around the body 14.

While the illustrated abutment 10 shows the porous metal material 24 only located where soft tissue faces the abutment, it will be understood that the porous metal material 24 may extend conronally or apically beyond this region as may be desired and as explained further below.

In one form, the porous metal material 24 is a porous tantalum portion 40 which is a highly porous biomaterial useful as a bone substitute and/or cell and tissue receptive material. An example of such a material is produced using Trabecular Metal™ technology generally available from Zimmer, Inc., of Warsaw, Indiana. Trabecular Metal™ is a trademark of Zimmer Technology, Inc. Such a material may be formed from a reticulated vitreous carbon foam substrate which is infiltrated and coated with a biocompatible metal, such as tantalum, etc., by a chemical vapor deposition ("CVD") process in the manner disclosed in detail in U.S. Patent No. 5,282,861. Other metals such as niobium, or alloys of tantalum and niobium with one another or with other metals may also be used.

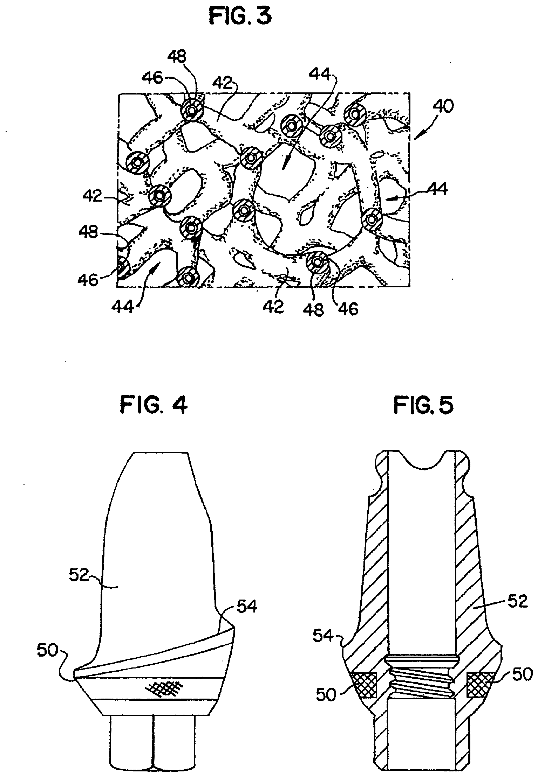

Generally, as shown in FIG. 3, the porous tantalum structure 40 includes a large plurality of ligaments 42 defining open spaces 44 therebetween, with each ligament 42 generally including a carbon core 46 covered by a thin film of metal 48 such as tantalum, for example. The open spaces or pores 44 between ligaments 42 form a matrix of continuous channels having substantially no dead ends, such that growth of soft tissue and/or cancellous bone through porous tantalum structure 40 is uninhibited. The porous tantalum may include up to 75%-85% or more void space therein. Thus, porous tantalum is a lightweight, strong porous structure which is substantially uniform and consistent in composition, and has pores easily infiltrated by soft tissue growth. The porous tantalum also closely resembles the structure of natural cancellous bone, thereby optionally or additionally providing a matrix into which cancellous bone may grow to anchor a prosthetic dental device into surrounding bone of a patient's jaw.

The porous tantalum structure 40 may be made in a variety of densities in order to selectively tailor the structure for particular applications. In particular, as discussed in U.S. Patent No. 5,282,861, the porous tantalum may be fabricated to many different desired porosity and pore sizes, and can thus be matched with the surrounding soft tissue (and/or natural bone if desired) in order to provide an improved matrix for soft tissue (and/or bone) in-growth and mineralization. This includes a gradation of pore size on a single implant such that pores are larger on an apical end to match cancellous bone, and smaller on a coronal end to match cortical bone, or even to receive soft tissue ingrowth. Also, the porous tantalum could be made denser with fewer pores in areas of high mechanical stress. This can be accomplished by filling all or some of the pores with a solid material which is described in further detail below.

The main portion 32 may be made of metal, such as titanium, and the porous material 24 may be sintered or otherwise diffusion bonded to the main portion 32. When the main portion 32 is made of a ceramic, polymer, or other composites, the porous material 24 may be adhered to such materials. The porous material 24 may be alternatively or additionally press-fit or friction-fit into the groove 34 on the main portion 32.

Referring to FIGS. 4-5, rather than the post-type abutment 12, a soft tissue engagement region 50 may also be placed on a contoured abutment 52 as illustrated. Such contoured abutments have a margin 54 shaped to more closely coincide to the natural profile of gingiva. Other than the shape of the abutment 52, the soft tissue engagement region 50 is similar or the same as the soft tissue engagement region 22 on abutment 12.

Referring to FIG. 6, a prosthetic device 60 includes an implant 62 with a body 64 that has a coronal end portion 66 forming a soft tissue engagement region 68 with a porous metal, and a bone engaging region 70 that is apical of the soft tissue engagement region 68. The coronal end portion 66 forms an emergence profile portion to extend through soft tissue, and is flared radially outward to generally match the emergence profile of a natural tooth. The soft tissue engagement region 68 has an outer surface 72 that extends radially outward to match the shape of the coronal end portion 66. As with the abutments 12 and 52 described herein, the soft tissue engagement region 68 may extend radially inward into a groove or recess formed by a main portion of the implant 62. While implant 62 is shown with threads 74 for engaging bone, the implant 62 may have other configurations for a press-fit into a bore in the alveolar. It will be understood that while the soft tissue engagement region 68 is shown only at the emergence profile 66 on the implant 62, the porous metal forming the soft engagement region 68 may extend coronally or apically of the soft tissue engagement region 68.

In accordance with the present invention and referring to FIG. 7, an implant 80 has a bone engaging region 82 of porous metal placed apically of a soft tissue engaging region 84 also of porous metal and that is disposed to extend through the soft tissue. Like the soft tissue engagement region 84, the bone engagement region 82 is made of a similar porous metal so that bone may osseointegrate into pores of the porous metal for a strong bond. In the illustrated form, an intermediate portion 86 has an exterior surface 88 free of porous metal and between the bone engaging region 82 and the soft tissue engaging region 84. The intermediate portion 86 forms a collar-shaped wall 90 forming the surface 88 and that extends radially outward from at least one of the bone engaging region 82 and the soft tissue engaging region 84, but shown here extending radially outward from both regions 82 and 84. So configured, the wall 90 provides extra separation distance from the location at the soft tissue engagement region 84
where a soft tissue barrier or seal 25 (shown in FIG. 2) may form, and to the bone engagement region 82. The wall 90 may be placed so that its coronal edge 92 is generally even with the coronal alveolar ridge so that the remainder of the wall 90 faces bone within the bore made for the implant. It will be understood, however, that the wall 90 may be placed more coronally to completely or partially face soft tissue as well.

It will also be understood that any of the soft tissue engagement regions described above may be placed on a one-piece prosthetic device with a body that has an implant portion configured for engaging jaw bone tissue and integrally formed with an abutment. In one form, the porous metal may be located only at the soft tissue engaging region on the dental prosthetic device. Alternatively, the porous metal may be placed on other parts of the prosthetic device as described for the other embodiments to additionally engage bone for example

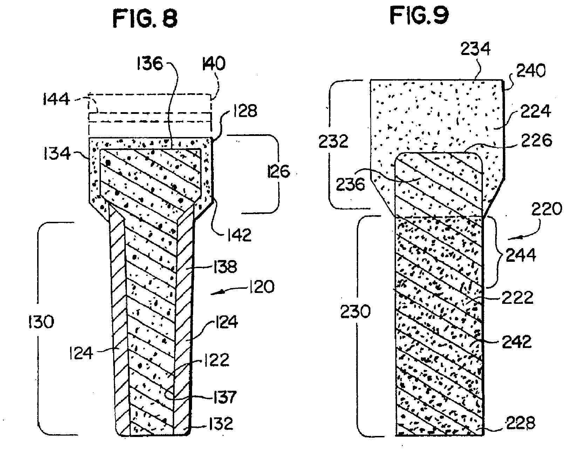

Referring to FIG. 8, an illustrated one-piece dental prosthetic device 120 includes a core 122 and a porous metal portion 124 in the form of a sleeve 138 that at least partially surrounds the core 122 and may be made of a porous tantalum such as Trabecular Metal™ as described above. The dental device 120 also has an integral abutment portion 126 at a proximal end portion 128 of the one-piece dental device 120, and an implant portion 130 at a distal end portion 132 of the one-piece dental device 120. An outer portion 134 has an esthetic plastic or composite material 142, one type of which is fully described in parent U.S. Patent Application No. 11/847,476 mentioned above. The esthetic material 142 provides the abutment portion 126 with a color generally replicating the color of natural teeth and is disposed at least at the abutment portion 126 of the device 120.

For the one-piece dental device 120, the core 122 also is made of a porous metal such as tantalum as described above and may be received by an interior or bore 137 of the sleeve 138. The core 122 can be inserted into the sleeve 138 by various methods such as press-fit or mechanical threading as described above. Alternatively, the sleeve 138 may be integrally formed with the core 122. While the porous metal portion 124 generally remains on the implant portion 130 (i.e. it does not extend substantially onto the abutment portion 126 in this example), the porous metal core 122, in one form, widens and forms the bulk of the abutment portion 126 and forms a strong, reinforcing post that extends from within the implant or anchor portion 130 to within the abutment portion 126. Thus, in this case, the porous metal, and therefore, the porous metal portion 134, may be described as generally extending throughout the prosthetic device 120.

For the dental device 120, the core 122 is impregnated with a filler to provide additional mechanical strength and stability to the porous structure. The filler may be a composite material, which may be the same as the esthetic material 142 as shown in the illustrated example here, and may fill in the vacant open spaces in the porous tantalum. Alternatively, or additionally, the filler material may be a non-resorbable polymer. Examples of non-resorbable polymers for infiltration of the porous structure may include a polyaryl ether ketone (PAEK) such as polyether ketone ketone (PEKK), polyether ether ketone (PEEK), polyether ketone ether ketone ketone (PEKEKK), polymethylacrylate (PMMA), polyetherimide, polysulfone, and polyphenolsulfone.

In the illustrated form, the composite or polymer material fills the pores of the entire length of the core 122 from the proximal end portion 128 to the distal end portion 132 although the filler may be present at less than this. The porous metal portion 124 forming the sleeve 138 and that forms the exterior of the implant portion 130 for engaging bone is substantially free of the esthetic material to receive the ingrowth of bone.

The esthetic material or esthetic portion 142 of the one-piece dental device 120, as mentioned above for the dental device 20, may be disposed at at least the outer portion 134 at the abutment portion 126 for esthetics and to at least partially cover the porous tantalum portion of the core 122 at the proximal portion 128 to limit gingival tissue growth there. Thus, at the proximal end portion 128 of the core 122, the outer portion 134 forms a smooth esthetic skin layer that is substantially free of porous tantalum, and is located around substantially the entire abutment portion 126. The outer portion 134 may have a skin layer that is approximately 0.05 to about 3.0 mm thick. With this configuration, the porous sleeve 138 substantially covers the implant portion 130 of the outer layer of the implant 120 to promote bone growth while the exposed abutment portion 126 with a solid, smooth esthetic outer surface limits the in-growth of soft tissue and bacterial growth against the abutment portion 126.

Referring again to FIG. 7, the esthetic material can equally be applied to the structure of implant 80 with the separation portion 86 that divides the bone engagement region 82 with the soft tissue engagement region 84. In this case, the porous material of the soft tissue engagement region 84 is extended coronally to form the core 94 (shown in dashed line) for an integral abutment 96 (also shown in dashed line) made of the esthetic or composite material mentioned above.

Turning back to FIG. 8, in one variation of the one-piece dental device 120, a thickened, outer and upper portion or layer 140 is formed coronally of the core 122 at the coronal end portion 128 and is made of the esthetic material. The upper layer 140 can be formed by injecting the esthetic material onto the porous structure of the tantalum core 122 until a coronal or terminal end 136 of the core 122 is coated with several millimeters of esthetic material. In one form, the layer 140 is substantially free of porous metal so that it can be easily shaped by a practitioner for receiving another dental device or restoration such as a dental prosthesis or final crown, for example.

In order to promote soft tissue growth to form a strong bacterial seal, however, one or more gaps 144 may be provided on the upper layer 140 to encourage soft tissue ingrowth to form a seal around the perimeter of the implant 120 at the location of the gap 144. This seal coupled with the non-porous outer surface formed by the esthetic portion 142 on the abutment portion 126 forms a barrier that limits bacteria, epithelium or other contaminants from passing through the porous metal of sleeve 138 and into a bone integration area along the implant portion 130. It is clearly inherent that gap 144 may be disposed anywhere on abutment portion 126 to expose empty pores of the porous metal of the core 122 (or porous metal may form a core of the upper layer 140) for soft tissue ingrowth. In this case, the soft tissue grows into the core's porous metal for a strong bond as similarly described for the other embodiments herein. While the gap 144 is shown as a continuous gap around the upper layer 140 it will be appreciated that many other forms are possible, such as noncontinuous gaps, spaced holes, or other uniform or more randomly placed openings, to name a few examples.

Referring now to FIG. 9, in yet another alternative one-piece dental device 220, a porous portion 222 forms an implant portion 230 at a distal or apical end portion 228 of the dental device 220. The porous portion 222 is filled with a resorbable material or polymer 242 to provide additional initial mechanical strength and stability but that maximizes bone tissue ingrowth. With this structure, the resorbable material 242 resorbs as the bone grows in and replaces it, which maintains the strength and stability of the implant. Since soft tissue grows faster than the bone tissue, the relatively smooth surface of the resorbable material 242 also helps to limit undesirable soft tissue ingrowth, and in turn, down-growth along the exterior surface of the implant portion 230 and between the bone and the dental device 220 until the bone has a chance to grow against and into the implant portion 230 and block further apical growth of the soft tissue.

Examples of resorbable polymers may include polylactic co-glycolic acid (PLGA), polylactic acid (PLA), polyglycolic acid (PGA), polyhydroxybutyrate (PHB), and polyhydroxyvalerate (PHV), and copolymers thereof, polycaprolactone, polyanhydrides, and polyorthoesters. It will be understood that such resorbable filler material may be used on any of the abutment or implant forms described herein.

The porous portion 222 may be made of tantalum or other materials as described above and, in broad terms, an outer portion 240 of the dental device 220 has a color generally replicating the color of natural teeth and comprises an esthetic portion or material 224. More specifically, the dental device 220 has a coronal end portion 234 that forms an abutment portion 232, and the esthetic portion 224 is placed on the abutment portion 232. The porous portion 222 forms a reinforcing core 236 of the abutment portion 232. While the core 236 is shown to extend approximately half the height of the abutment portion 232, it will be understood that other variations are possible including the core 236 extending at or near the terminal coronal end 234 of the abutment portion 232, or being much shorter such that the core 236 extends a relatively small distance into the abutment portion 232. In the illustrated form, the core 236 does not extend near the terminal coronal end 234 so that the esthetic portion 224 disposed coronally of the core 236 is separate from the porous portion 222 and is substantially free of porous metal so that the end 234 is easily shaped similar to coronal upper layer 140 of dental device 120 (FIG. 8).

It will be appreciated that the outer portion 240 may be located on any outer part of the abutment portion 232 and may be substantially free of the porous portion 222 as with the other embodiments herein. The outer portion 240 may contain a smooth exterior layer that has a minimal width of about 1 mm on the sides of the core 236 and/or may have a substantial thickness of about 1 to about 5 mm above the coronal end 226 of the core 236.

While the resorbable material 242 is only placed to interface with bone apically of the crest of the alveolar in the illustrated example, it will be understood that the resorbable material may be placed in a transgingival section of the prosthetic device 220 to interface with the soft tissue, or may be placed behind the esthetic material 224 to strengthen the porous structure 222.

When the resorbable material 242 is used for strengthening the porous structure 222 as in the illustrated example, the resorbable material 242 should be placed throughout all of the pores (or at least within the pores that the bone will be able to grow into). It will be understood, however, the resorbable material 242 could be primarily placed to control soft tissue growth. In this case, the resorbable material may optionally be placed only where soft tissue is likely to grow, such as within a range (indicated by brackets 244) of about 3 mm apically from the coronal crest of the alveolar. Alternatively, the resorbable material could be placed to mainly interface with cortical bone rather than cancellous bone.

While the illustrated forms are shown to be dental implants, it will be understood that such structures may be applied to other areas of an animal or human body. Thus, implants with porous material such as a porous metal, or more specifically porous tantalum, for promoting or controlling the ingrowth of soft tissue and/or bone tissue whether or not used with a filler material such as a resorbable material to add strength to the implant may also be used in soft tissue (whether overlaying bone or as part of organs, etc.) and/or bones other than at a mandible or maxillae.

While this invention may have been described as having a preferred design, the scope of protection is defined the appended claims.

## Claims

1. A dental prosthetic device comprising: a body having a soft tissue engagement region (84) formed of porous metal defining pores for the ingrowth of soft tissue into the pores,
a bone engaging region (82) apical of the soft tissue engagement region (84) and having porous metal for engaging bone tissue, and
an intermediate portion (86) arranged between the bone engaging region (82) and the soft tissue engagement region (84),
**characterized in that**
the intermediate portion (86) has an exterior surface free of porous metal and extends radially outward between the bone engaging region (82) and the soft tissue engagement region (84).

2. The dental prosthetic device of claim 1 wherein the intermediate portion (86) is a collar.

3. The dental prosthetic device of claim 1 further comprising a coronal end portion (96) having an esthetic material.

4. The dental prosthetic device of claim 1 wherein the porous metal includes tantalum.

5. The dental prosthetic device of claim 1 further comprising an outer layer of esthetic material covering at least a portion (94) of the porous metal of the soft tissue engagement region (84), the outer layer having a gap exposing the porous metal for receiving soft tissue.

6. The dental prosthetic device of claim 1 further comprising: a resorbable material disposed in at least a portion of the pores.

## Patentansprüche

1. Dentalprothesenvorrichtung umfassend: einen Körper mit einem Weichgewebeeingriffsbereich (84), der aus porösem Metall geformt ist, das Poren zum Einwachsen von weichem Gewebe in die Poren definiert,
einen Knocheneingriffsbereich (82) apikal des Weichgewebeeingriffsbereichs (84), der poröses Metall zum Eingriff mit Knochengewebe aufweist, und
einen Zwischenabschnitt (86), der zwischen dem Knocheneingriffsbereich (82) und dem Weichgewebeeingriffsbereich (84) angeordnet ist,
**dadurch gekennzeichnet, dass**
der Zwischenabschnitt (86) eine Außenfläche aufweist, die frei von porösem Metall ist und sich radial auswärts zwischen dem Knocheneingriffsbereich (82) und dem Weichgewebeeingriffsbereich (84) erstreckt.

2. Dentalprothesenvorrichtung nach Anspruch 1, wobei der Zwischenabschnitt (86) ein Bund ist.

3. Dentalprothesenvorrichtung nach Anspruch 1, ferner mit einem koronalen Endabschnitt (96), der ein ästhetisches Material aufweist.

4. Dentalprothesenvorrichtung nach Anspruch 1, wobei das poröse Metall Tantal umfasst.

5. Dentalprothesenvorrichtung nach Anspruch 1, ferner mit einer Außenschicht aus ästhetischem Material, die zumindest einen Abschnitt (94) des porösen Metalls des Weichgewebeeingriffsbereichs (84) bedeckt, wobei die Außenschicht einen Spalt aufweist, der das poröse Metall zur Aufnahme von Weichgewebe freilegt.

6. Dentalprothesenvorrichtung nach Anspruch 1, ferner mit: einem resorbierbaren Material, das in zumindest einem Abschnitt der Poren angeordnet ist.

## Revendications

1. Dispositif prothétique dentaire comprenant : un corps ayant une région d'engagement pour tissus mous (84) formée en métal poreux définissant des pores pour la croissance des tissus mous jusque dans les pores,
une région d'engagement pour os (82) en situation apicale par rapport à la région d'engagement pour tissus mous (84) et ayant un métal poreux pour engager des tissus osseux, et
une portion intermédiaire (86) agencée entre la région d'engagement pour os (82) et la région d'engagement pour tissus mous (84),
**caractérisé en ce que**
la portion intermédiaire (86) a une surface extérieure exempte de métal poreux et s'étend radialement vers l'extérieur entre la région d'engagement pour os (82) et la région d'engagement pour tissus mous (84).

2. Dispositif prothétique dentaire selon la revendication 1, dans lequel la portion intermédiaire (86) est un collier.

3. Dispositif prothétique dentaire selon la revendication 1, comprenant en outre une portion d'extrémité coronale (96) ayant un matériau esthétique.

4. Dispositif prothétique dentaire selon la revendication 1, dans lequel le matériau poreux inclut du tantale.

5. Dispositif prothétique dentaire selon la revendication 1, comprenant en outre une couche extérieure de matériau esthétique qui couvre au moins une portion (94) du métal poreux de la région d'engagement pour tissus mous (84), la couche extérieure ayant un intervalle qui expose le métal poreux afin de recevoir des tissus mous.

6. Dispositif prothétique dentaire selon la revendication 1, comprenant en outre un matériau résorbable disposé dans au moins une portion des pores.
